# EUROPEAN PATENT SPECIFICATION

(11) **EP 2 321 368 B1**
(45) Date of publication and mention of the grant of the patent: **22.01.2014**
(21) Application number: 09792216.5
(22) Date of filing: 03.09.2009
(51) Int. Cl.: C08L 23/08

(54) **HOT MELT ADHESIVE COMPOSITION**
HEISSSCHMELZKLEBSTOFFZUSAMMENSETZUNG
COMPOSITION D'ADHÉSIF THERMOFUSIBLE

(30) Priority: 05.09.2008 US 94519 P
(43) Date of publication of application: 18.05.2011
(73) Proprietor: The Procter & Gamble Company, Cincinnati, OH 45202 (US)
(72) Inventor: CORZANI, Italo, I-66100 Chieti (IT); LUNETTO, Pietro, I-65025 Manoppello (IT)
(74) Representative: Holmes, Rosalind
(86) International application number: PCT/US2009/055847
(87) International publication number: WO 2010/028119

(56) References cited:
- JP-A- 10 130 606
- US-A- 4 460 728
- US-A- 4 728 688
- US-A- 5 441 999
- US-A1- 2006 068 672
- US-B1- 6 297 309
- US-B1- 6 765 054

## Description

### FIELD OF THE INVENTION

The present invention relates to hot melt adhesive compositions with improved cohesion and adhesion on plastics and on plastic porous substrates.

### BACKGROUND OF THE INVENTION

Hot melt adhesives adhere to the surfaces to which they are applied by chemical adhesion and, for some surfaces mechanical inter-locking. Chemical adhesion occurs as the consequence of a good mutual wetting between the adhesive and a substrate that allows a very intimate contact, at a molecular scale, between the two substances. At this scale, intermolecular forces, such as dispersion forces, dipole-dipole interactions and hydrogen bonds, are allowed to activate between the molecules of the adhesive and those of the substrate to form the basis of the chemical adhesion. Mechanical interlocking occurs when the adhesive composition penetrates the pores, irregularities and surface contours of the surface to which the adhesive is applied. On porous substrates, like fibrous substrates, e.g. plastic nonwoven materials, the observed overall adhesion is always the sum of the chemical adhesion plus the mechanical inter-locking.

Hot melt adhesive compositions based on ethylene-vinyl acetate copolymers have been known in the art for many years. These adhesives offer several advantages, such as strong adhesion on substrates like paper, wood, glass, and fabrics, good elasticity, and resistance to fatigue-failure. Ethylene-vinyl acetate copolymer based formulations are widely used as adhesives for paper based gluing in fields like book and magazine binding, amateur use, and for the gluing of card board or paper board cartons, boxes.

It is known, however, that hot melt adhesives that are useful for one type of material may be entirely unusable for other applications. See U.S. Patent No. 4,299,745. Hot melt adhesive compositions that are suitable for bonding cardboard boxes and other paper based surfaces do not form strong bonds with other surfaces, such as plastic films and fibers.

In the more critical and demanding applications where plastic films, typically polyolefin films, must be glued together and/or to other plastic or non woven materials made of polyolefinic fibers, for example in the construction of hygienic articles like baby and adult diapers, feminine pads, current adhesive formulations based on ethylene-vinyl acetate copolymers cannot be used satisfactorily. In these applications, the conventional formulations of ethylene-vinyl acetate copolymer-based hot melt adhesives exhibit poor cohesion and poor elongation at break, poor adhesion on plastics, in particular on the most hydrophobic plastics, like polyolefins, and poor penetration and adhesion on plastic porous substrates like non woven materials.

Because of these severe drawbacks, hygienic articles have heretofore required the use of hot melt adhesives based on styrenic block copolymers, notwithstanding their higher cost, more difficult processing, higher softening points and other troublesome properties. The current formulations of styrenic block copolymers thus have drawbacks of their own, which grow more severe as the costs of raw materials, processing and transportation of these adhesives rise.

US5441999 discloses an hot melt adhesive comprising a blend of a low molecular weight polyolefin, olefin-carboxylic acid graft polymer or olefin-maleic anhydride graft polymer or blend thereof; a propylene-ethylene copolymer or propylene-ethylenebutene terpolymer: and a tackifying resin or blend of tackifying resins. Examples 1-4 relate to bookbinding applications. US4728688 relates to perfect binding of books using a two-shot method. The adhesive composition of US4728688 comprises (i) at least one segmented ethylene-vinyl acetate (EVA) copolymer, (ii) at least one tackifying resin, (iii) at least one antioxidant, and (iv) at least one other EVA (claim 1[b]). US6765054 discloses a hot melt adhesive composition that is well suited to bonding an edgeband to wood and wood products. The composition of US6765054 includes a first ethylene-vinyl acetate copolymer including from about 25% vinyl acetate to about 30% vinyl acetate based upon the weight of the first copolymer and having a melt index of no greater than 4 g/10 min, a second ethylene-vinyl acetate copolymer that includes no greater than about 28% vinyl acetate based upon the weight of the second copolymer and having a melt index of from about 400 g/10 min to about 2500 g/10 min, and hydrogenated petroleum hydrocarbon resin. US20060068672 discloses a spray-on adhesive composition made from components including a high melt index polymer and a high melt tackifier, Disposable articles are mentioned, JP10130606 discloses a hot-melt adhesive composition comprising two ethylene-vinyl acetate copolymers (A and B) having specific properties, and also optionally (if necessary) comprising tackifier and/or wax. US 6,297,309 B1 discloses a pressure-sensitive hot-melt adhesive composition characterized in that it includes a) at least one ethylene-alkyl acrylate copolymer, b) a tackifying resin and c) optionally a diluent and/or a stabilizer and/or a wax. The composition is stated to be especially for the adhesive bonding of disposable nappies and of catamenial liners. US4,460,728 relates to hot melt adhesive compositions are prepared from ethylene copolymers, atactic polypropylene, tackifying resins and optional additives. The adhesives are nonpressure sensitive and are characterized by high cohesive strength, strong tack, and good heat, creep and cold resistance. In accordance with the preferred embodiment, the adhesives are formulated so as to be particularly adaptable for use in the construction of disposable diapers of the multi-line construction variety.

### SUMMARY OF THE INVENTION

The present invention relates to an adhesive composition as recited in claim 1, which comprises two different ethylene vinyl acetate copolymers, at least one tackifier, at least one plasticizer and relatively minor amounts of at least one hydrocarbon wax. More particularly, the adhesive composition comprises a first ethylene vinyl acetate copolymer having a high molecular weight characterized by a melt viscosity at 150 °C, of 100 Pascals per second or more and a second ethylene vinyl acetate copolymer having a low molecular weight characterized by a melt viscosity at 150 °C of 50 Pascals per second or less, wherein the second, low molecular weight ethylene vinyl acetate copolymer is present in an amount by weight percent less than or equal to the amount by weight percents of the first, high molecular weight ethylene vinyl acetate copolymer. The composition also comprises at least one tackifier resin present in an amount such that the ratio between the weight percent of the tackifier resin and the sum of the weight percent of the first and second ethylene vinyl acetate copolymers is from 0.8 to 2.5. The composition also includes at least one hydrocarbon wax present in an amount from 0.5 % to 10 % by weight of the composition and at least one liquid plasticizer present in an amount up to 20 % by weight of the composition.

The ratio in weight between of the first and second ethylene vinyl acetate copolymers is preferably greater than or equal to 0.8, and more preferably greater than or equal to 1. In various embodiments, the combined weight percent of the first and second ethylene vinyl acetate copolymers in the composition is within the range of 15 % and 40 %. Each of the first and second ethylene vinyl acetate copolymers individually have vinyl acetate content less than or equal to 30 % by weight of the single copolymer. In various embodiments of the composition, the overall content of vinyl acetate in the composition is less than or equal to 10 % by weight of the composition, and preferably, less than or equal to 8 % by weight of the composition. In other words, the sum of the two products of the multiplication of the fraction of each ethylene vinyl acetate copolymer in the composition, multiplied by its individual vinyl acetate content is less than or equal to 10 % by weight of the composition.

In various embodiments of the composition, the melt viscosity at 150 °C of the first ethylene vinyl acetate copolymer may be greater than or equal to 150 Pascals per second. The melt viscosity at 150 °C of the second ethylene vinyl acetate copolymer may be less than or equal to 25 Pascals per second. The viscosity of the various embodiments of the composition at 120 °C is preferably from 2,000 to 10,000 mPascals per second.

Various embodiments of the composition may include one or more additives, such as antioxidants, mineral fillers, pigments, dyes, stabilizers, volatile liquids and combinations thereof. Additives may comprise up to 30 % by weight of the adhesive composition. An antioxidant, for example, if present, may comprise an amount from 0.03 to 1 % by weight of the composition.

Also provided is an article comprised of at least one polyolefin substrate bound by the adhesive composition as described herein.

The compositions of the present invention have a novel and balanced set of properties that give to them a unique and optimized balance of excellent cohesion, adhesion on plastics and on plastic porous substrates like nonwovens. It has been surprisingly found that the balance of properties provided by the formulations described herein permit the use of ethylene vinyl acetate copolymer based hot melt adhesives in the bonding by adhesion of plastic materials, and in particular, of hydrophobic plastic films and plastic nonwoven materials, such as the polyolefinic films and nonwovens used in hygienic articles. The adhesive composition over comes the problems experienced in the past with ethylene vinyl acetate based adhesives on such surfaces.

For example, prior attempts in the art to improve the cohesion of ethylene vinyl acetate based hot melts obliged the formulator to increase the content of polymer in the formulation. However, increasing the polymer has a very negative effect on the softening point of the hot melt, which increases. Moreover, an increase in polymer content negatively affects the melt viscosity, which rapidly becomes too high and very difficult to extrude and apply, especially on industrial lines running at high speed, like the ones for hygienic articles. The same thing happens if the improvement of the adhesive cohesion is attempted through the increase of the molecular weight of the ethylene vinyl acetate copolymer. However, if the composition is hardened, for example, by adding high amounts of a hard and crystalline wax, the composition tends to become fragile and exhibits particularly low elongation at break values. Both properties, poor cohesion and poor elongation at break, achieve similar unsatisfactory properties in use, *i.e.* easy breaking of the adhesive under even moderate stresses or elongations during use.

The molecules of ethylene vinyl acetate contain segments made of polyethylene, which in principle should be able to give good bonding on polyolefinic substrates, but also contain segments of vinyl acetate, which are highly polar and have poor adhesion on polyolefins. It was found that only a balanced and controlled content in the formulation of vinyl acetate can give a satisfactory bonding on hydrophobic plastics and in particular on polyolefins, both in the form of films and of fibers (nonwovens) as met mainly in the construction of hygienic articles.

In fact, formulations of ethylene vinyl acetate heretofore available, especially those containing high amounts of wax, partially address the problems of the balance in viscosity and cohesion and of the poor adhesion on plastics. However, high amounts of wax harden the composition but do not give a substantial improvement in the overall cohesion. Moreover, it was found that the wax lowers the elongation at break of the adhesive, which for many applications of interest is highly unsatisfactory. More importantly, it has been found that the addition of large amounts of wax significantly worsens the adhesion of these formulations on porous substrates, and in particular on nonwovens.

In order to form strong bond on porous substrates like nonwovens, it is essential that the molten hot melt, once applied, remains in a liquid and relatively low-viscous state for a sufficiently long time, so that it is able to penetrate inside the open spaces between the fibers of the nonwoven material and surround the single fibers as much as possible. If the molten adhesive is not able to deeply penetrate between the fibers, the contact area between the adhesive and the nonwoven material is limited to the very small top area of some of the most external fibers, which leads to a very low adhesion. It has been determined that a suitable adhesive for strong bonding of porous substrates must have a melt viscosity vs. temperature curve that is relatively flat. This means that the adhesive composition must remain liquid and at low viscosity over a relatively long time while its temperature decreases due to its spontaneous cooling after its application on a substrate, so that it can easily flow inside the porous substrate.

The composition of the present invention achieves a sufficiently deep penetration into the nonwoven material and therefore a sufficiently strong mechanical inter-locking between the adhesive composition and the nonwoven fibers to provide excellent bonding strengths in nonwoven materials. This requirement is well expressed by the fact that the viscosity vs. temperature curve has a relatively flat shape around the processing temperature. That is, to achieve good penetration and adhesion on porous substrates, the molten hot melt adhesive sets in a relatively slow manner. The prior formulations based on ethylene vinyl acetate copolymers, even when not containing waxes, generally have a viscosity vs. temperature curve that is too steep to allow a satisfactory penetration into porous substrates. Waxes have extremely steep viscosity vs. temperature curves and therefore set very rapidly, further negatively impacting the ability of ethylene vinyl acetate copolymer based adhesives to penetrate porous substrates like nonwoven materials.

The composition of the present invention solves the aforementioned problems. The composition contains at least two ethylene vinyl acetate copolymers, one at a higher molecular weight and higher viscosity to favor high cohesion, and one at lower molecular weight and lower viscosity to favor penetration into porous substrates. The composition of the present invention has a well defined range of melt viscosities at the application temperature, *e.g.* at 120 °C, and has a defined "rate of setting" as a function of cooling. These two parameters contribute to good penetration inside the porous substrates and the creation of mechanical inter-locking.

The composition contains a limited amount of the polar component vinyl acetate to favor strong adhesion on plastics and in particular on the most hydrophobic ones like polyolefins. The composition also contains a limited amount of wax. The composition contains some liquid plasticizer, e.g. mineral oils or vegetable oils or combinations of each that increase the elongation at break if added in limited amounts, and aid adhesion on plastic substrates.

### BRIEF DESCRIPTION OF THE FIGURES

Various embodiments described herein may be understood by reference to the following description, taken with the accompanying drawings as follows:

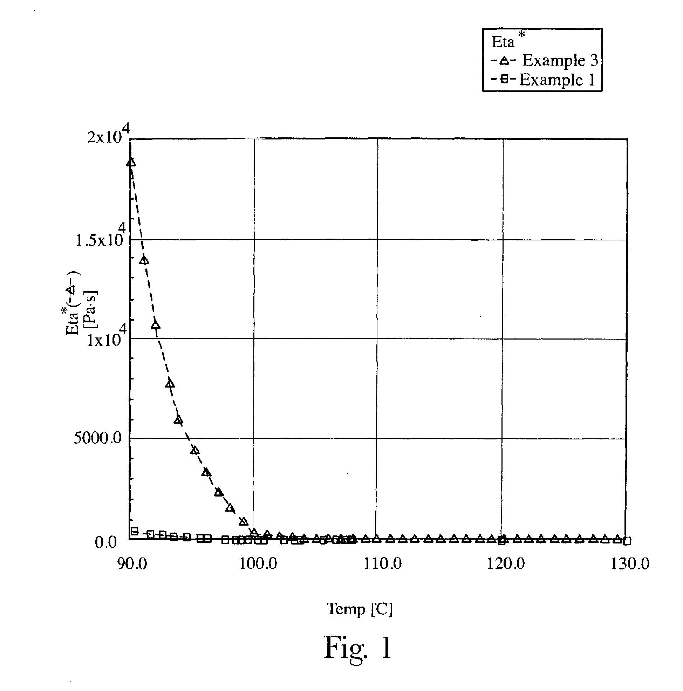

FIG. 1 is a graph of the viscosity vs. temperature curve for Example 1 (□) and the Comparative Examples showing the good results obtained using an embodiment of the adhesive composition described herein and the unacceptable results obtained from the compositions in the comparative examples, such as Example 3 (Δ).

### DETAILED DESCRIPTION OF THE INVENTION

### A. Definitions

As used herein, the articles including "the", "a" and "an" when used in a claim or in the specification, are understood to mean one or more of what is claimed or described.

As used herein, the term "comprising" means various components conjointly employed in the preparation of the compositions of the present disclosure. Accordingly, the terms "consisting essentially of" and "consisting of" are embodied in the term "comprising".
As used herein, the term "hygienic article" refers to diapers, other wearable and absorbent articles such as incontinence briefs, incontinence undergarments, absorbent inserts, diaper holders and liners, feminine hygiene garments, panty liners, pads, absorbent crib and bed liners and pads, shoe insoles, bandages.

"Disposable" is used in its ordinary sense to mean an article that is disposed or discarded after a limited number of usage events over varying lengths of time, for example, less than about 20 events, less than about 10 events, less than about 5 events, or less than about 2 events.

"Diaper" refers to an absorbent article generally worn by infants and incontinent persons about the lower torso so as to encircle the waist and legs of the wearer and that is specifically adapted to receive and contain urinary and fecal waste. As used herein, term "diaper" also includes "pant" which is defined below.

"Pant" or "training pant", as used herein, refer to disposable garments having a waist opening and leg openings designed for infant or adult wearers. A pant may be placed in position on the wearer by inserting the wearer's legs into the leg openings and sliding the pant into position about a wearer's lower torso.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

### B. Description of the Various Embodiments

It has been surprisingly found that a polymeric composition comprising a balance of ethylene vinyl acetate copolymers having a defined vinyl acetate content and molecular weights, a defined amount of a polyolefinic wax, and an amount of a liquid plasticizer, together with tackifiers to improve the adhesion or lower viscosity of the composition, while at the same time increasing the setting time can lead to ethylene vinyl acetate copolymer-based hot melt adhesives that have an excellent and fully satisfactory balance between good cohesion, good elongation at break, relatively low viscosity, good adhesion on plastics and in particular on polyolefins and excellent penetration and adhesion on plastic nonwovens. Such compositions can be applied as hot-melt adhesives and also have surprisingly good adhesion on most substrates, and particularly on plastic films. The combination of properties make the novel ethylene vinyl acetate copolymer based hot melt adhesive compositions the choice adhesives even for critical applications, and in particular for the construction of hygienic articles.

The hot melt adhesive compositions of the various embodiments of the invention include generally, two ethylene vinyl acetate copolymers, one having a high molecular weight and the other a lower molecular weight, a relatively limited amount of a hydrocarbon wax, at least one suitable tackifier, and at least one plasticizer. The constituents of the various embodiments of the adhesive composition have well defined characteristics and ratios which give the composition surprisingly effective properties of cohesion and chemical and mechanical adhesion to plastics, and in particular, plastic porous substrates, such as nonwoven materials. The improved characteristics of the compositions of the invention make them particularly advantageous for use in the construction of hygienic articles.

The compositions of the present invention have a defined range of melt viscosity at the application temperature, e.g. at 120 °C and a setting rate as a function of temperature, given, for example, by the slope of the curve, Viscosity vs. Temperature, lower than a defined value.

The molecular weights of the ethylene vinyl acetate copolymers are characterized by their melt viscosity at 150 °C. More specifically, the high molecular weight ethylene vinyl acetate copolymer is characterized by having a melt viscosity at 150 °C, greater than or equal to 100 Pascals per second, and preferably greater than or equal to 150 Pascals per second. The low molecular weight ethylene vinyl acetate copolymer is characterized by having a melt viscosity at 150 °C, less than or equal to 50 Pascals per second, and preferably less than or equal to 25 Pascals per second.

To favor a good cohesion, the ratio in weight (both the relative ratio in weight and the ratio of % content in the overall composition) between the high and low molecular weight copolymers is preferably at least 0.8 and more preferably greater than or equal to 1. To limit the melt viscosity to easily processable values, the combined overall content by weight in the composition of the two ethylene vinyl acetate copolymers is between 15 % by weight and 40 % by weight.

In various embodiments, each of the first and second ethylene vinyl acetate copolymers individually have vinyl acetate content less than or equal to 30 % by weight of the single copolymer. In various embodiments of the composition, the overall content of vinyl acetate in the composition is less than or equal to 10 % by weight of the composition, and preferably, less than or equal to 8 % by weight of the composition. In other words, the sum of the two products of the multiplication of the fraction of each ethylene vinyl acetate copolymer in the composition, multiplied by its individual vinyl acetate content is less than or equal to 10 % by weight of the composition.

Suitable Ethylene-vinyl acetate copolymers may be obtained commercially, such as those sold under the trade names Elvax™ by Dupont, Evathane™ by Arkema, Escorene™ by Exxon Mobil and Levapren™ and Levamelt™ by Bayer.

The tackifier resin or blend of resins is chosen from among the following chemical classes of tackifiers: aromatic hydrocarbon tackifiers, aliphatic hydrocarbon tackifiers, aliphatic-aromatic hydrocarbon tackifiers (also known as C5-C9 tackifiers), terpenic tackifiers, rosins, rosin ester tackifiers and combinations and blends of any of the foregoing tackifiers. The tackifier resin may he selected from the group consisting of aromatic hydrocarbon tackifiers, aliphatic hydrocarbon tackifiers, aliphatic-aromatic hydrocarbon tackifiers, rosins and rosin ester tackifiers, partially or totally hydrogenated derivatives thereof and combinations thereof. Each of the tackifiers contained in the composition has a softening point between 45 °C and 130 °C. The tackifier or blend of tackifiers in the adhesive composition is preferably present in a ratio by weight between 0.8 and 2.5 relative to the overall content by weight of the sum of the two ethylene vinyl acetate copolymers.

The various embodiments of the composition also contains at least one hydrocarbon wax, preferably a polyolefin wax, having a dropping point between 90 °C and 140 °C. The wax decreases the viscosity of the composition to help in processing the composition at relatively low temperatures, e.g. 120 °C, and increases the mechanical adhesive properties of the composition due to the enhanced crystallization of the composition. However, to avoid the severe drawbacks heretofore experienced in the art due to having too high amounts of wax, the wax content in the adhesive composition is advantageously limited to the range between 0.5 and 10 % by weight. Preferred hydrocarbon waxes are selected from among the Fischer-Tropsch waxes, polyethylene waxes and microcrystalline waxes.

The composition also contains at least one plasticizer to permit adjustment of the viscosity of the composition and to improve the processability of the composition at relatively low temperatures. The plasticizer also increases the elongation at break of the composition. The amount of plasticizer is no higher than 20 % by weight to maintain good cohesion. The oil plasticizers suitable for the present invention are selected from among naphthenic, aromatic or paraffinic mineral oils, vegetable oils and their derivatives or mixtures of each. The liquid plasticizers are present in the composition in an amount between 3 % and 20 % by weight of the total composition.

In various embodiments of the composition of the present invention, other additives, such as antioxidants, mineral fillers, pigments, dyes, stabilizers, and volatile materials may optionally be present in quantities up to 30 % by weight. The compositions may contain, for example, from 0.03 to 1.0 % by weight of a suitable antioxidant.

Volatile materials which can be used in the present invention are for example deodorants, aromas, repelling agents, and perfumes. As used herein the term perfume means any odoriferous material. Typical perfumes which can be used in the present invention comprise, for example. woody/earthy bases containing exotic materials such as sandalwood oil, civet, patchouli oil. Other suitable perfumes are for example light, floral fragrances, *e.g.,* rose extract, violet extract. Perfumes can be formulated to provide desirable fruity odors, *e.g.,* lime, lemon, orange. In short, any chemically compatible material which emanates a pleasant or otherwise desirable odor can be used as a perfume in the present invention. Perfume materials are described more fully in S. Arctander, Perfume Flavors and Chemicals, Vols. I and II, Aurthor, Montclair, N.J., and the Merck Index, 8th Edition, Merck & Co., Inc. Rahway, N.J.

The adhesive compositions of the present invention have a melt viscosity at 120 °C between 2000 and 10,000 mPascals per second. To further facilitate the penetration into porous substrates like nonwoven materials, the compositions of the invention have a "Viscosity vs. temperature" curve that shows a relatively flat shape around the processing temperature, preferably contained between 90 °C and 130 °C. The melt viscosity is expressed by the fact that for the Eta (at 90 °C), the viscosity expressed in Pascals per second at 90 °C, and the Eta (at 130 °C), the viscosity in Pascals per second at 130 °C, the following relationship is valid:
(Eta (90 °C) - Eta (130 °C)) / (130 - 90) ≤ 100, and preferably (Eta (90 °C) - Eta (130))/(130 - 90) ≤ 50, and more preferably, (Eta (90 °C) - Eta (130 °C) / (130 - 90) ≤ 20.

The improved characteristics of the compositions and in particular, their low melt viscosities, make it possible to process them at significantly lower temperatures than current ethylene vinyl acetate copolymer and styrene block copolymer hot melts, e.g. at 120 °C, with important energy savings, while keeping all the good properties of other current hot melts processed at 150-160 °C and even above.

The polymeric compositions of the present invention preferably are thermoplastic polymeric compositions. These can be manufactured by using any known process for manufacturing thermoplastic polymeric compositions and will typically comprise the steps of melting the polymer and then homogeneously blending the plasticizer, the tackifier and any additives to form a homogeneous mass that is then cooled to obtain the polymeric composition according to the present invention.

The polymeric compositions of the present invention, due to their rheology and to their adhesion properties, are particularly useful to be applied in the molten state onto a selected substrate, and directly adhered thereto. The compositions of the present invention can be used as an adhesive for any suitable substrate. Multiple substrates can be adhered to one another, and/or a single substrate can be adhered to itself (e.g., a substrate that is folded such that at least two different points on the same substrate are adhered to one another). For example, the compositions have application in coatings, on films, for laminates, and most advantageously, for disposable absorbent articles, such as hygienic articles (e.g., diapers, feminine protection products such as feminine pads and tampons, adult incontinence products such as incontinence pads), fluid absorbent cleaning products, wound dressings, bibs. In particular, the adhesive compositions are very useful for application to the plastic nonwoven material comprised in various articles, such as hygienic articles.

### EXAMPLES

The compositions of the present invention will be illustrated with the following examples.

### Testing Methodology

The internal cohesion of the formulations has been evaluated in the following way. Samples of the composition were been molded in the form of "dog-bone" slabs, about 3 mm thick and 80 mm long. The samples were put into a dynamometer and a constant load of 0.26 MPa was applied until the material broke. The time needed for breaking (Creep time) was taken as the first indicator of good cohesion (the higher the Creep time, the more cohesive).

A second type of evaluation of internal cohesion was done in the following way. The same dog-bone samples described above were subjected to a standard stress / strain test at a constant stretching speed of 0.8 mm/s. The elongation at break and the total energy absorbed for breaking the sample was taken as additional indicators of cohesion.

The adhesive properties on plastics and in particular on polyolefinic films and nonwovens, was evaluated in the following way. For adhesion on polyolefinic films, two films of polypropylene were glued together by extruding in between a coating weight of 35 g/m² of the formulation under examination. The adhesion was checked by a standard T-peel at a speed of 50 mm/min. The adhesion on nonwovens was evaluated as above with the only variation of substituting one of the two polypropylene films with one SMS polypropylene nonwoven having a basis weight of 15 g/m².

The key features are further illustrated in the following, non-exhaustive and non-limiting examples.

### Example 1: Adhesive Compositions and Properties

### Materials:

The following raw materials were compounded according to the present invention (bw = by weight):

| | |
|---|---|
| Escorene UL 15019 CC | 16.00 % bw |
| Escorene MV 2528 EH2 | 16.00 % bw |
| Sylvalite RE100 L | 50.00 % bw |
| Nytex 280 | 10.00 % bw |
| Vestowax H2050 | 7.90 % bw |
| Hostanox 1010 | 0.10 % bw |

Escorene UL 15019 CC is an ethylene vinyl acetate copolymer, available from Exxon Mobil, characterized by a vinyl acetate content of 19 % by weight and a melt viscosity at 150 °C of 262 Pascals.

Escorene MV 2528 EH2 is an ethylene vinyl acetate copolymer, available from Exxon Mobil, characterized by a vinyl acetate content of 28 % by weight and a melt viscosity at 150 °C of 9.6 Pascals.

Sylvalite RE100 L is a Rosin Ester tackifier, available from Arizona Co. characterized by a softening point of 100 °C

Nytex 820 is a plasticizing naphthenic mineral oil available from Nynas Co.

Vestowax H2050 is a synthetic Fischer-Tropsch wax available from Evonik Degussa having a dropping point of about 117 °C.

The above ingredients were compounded in the molten state, by procedures well known in the art for obtaining hot melt adhesives. For example, the adhesive composition may be prepared by feeding the components into a sigma blade mixer (e.g., IKA MIXER HD 0.6T), melting the components and mixing them at 150 °C for about 60 minutes to produce a homogeneous blend. The resulting composition showed the following properties:
Viscosity at 120 °C = 4990 mPascals per second
Elongation at break = 272 %
Energy for breaking = 388 mJoules
Creep Time = 2180 seconds
Eta (90) - Eta (130) / (130 - 90) = 9.80
T-peel film to film = 138 g/inch
T-peel film to nonwoven = 41 g/inch

The aforementioned properties are excellent for an adhesive composition for the construction of hygienic articles and in particular for bonding nonwovens to film with good cohesion and adhesion on polyolefins.

### Example 2: Comparative example

The same ingredients used in Example 1 were compounded according to formulation criteria similar to that taught by the Prior Art. The procedure for making the composition is the same as the procedure described above. In particular, a higher amount of wax was used according to the following formulation:

| | |
|---|---|
| Escorene UL 15019 CC | 16.95 % bw |
| Escorene MV 2528 EH2 | 16.95 % bw |
| Sylvalite RE100 L | 33.00 % bw |
| Nytex 280 | 16.50 % bw |
| Vestowax H2050 | 16.50 % bw |
| Hostanox 1010 | 0.10 % bw |

The formulation showed the following properties:
Viscosity at 120 °C = 2800 mPascals per second
Elongation at break = 30 %
Energy for breaking = 53 mJoules
Creep Time = 40 seconds
Eta (90) - Eta (130) / (130 - 90) = 9.39
T-peel film to film = 14 g/inch
T-peel film to nonwoven = 34 g/inch

Those skilled in the art of making hygienic articles will recognize that the foregoing properties are unsatisfactory for cohesion and lower adhesion, especially on film. In particular, an adhesion of only 14 g/inch on polyolefin films is absolutely unacceptable for parts of a baby diaper or a feminine pad because of the risk that with such properties, the film might debond and, therefore, the product might even open in use.

### Example 3: Comparative example

The following ingredients have been compounded not using any plasticizing oil according to the following formula:

| | |
|---|---|
| Escorene UL 15019 CC | 25.00 % bw |
| Escorene MV 2528 EH2 | 15.00 % bw |
| YT314 | 49.90 % bw |
| Vestowax H2050 | 10.00 % bw |
| Hostanox 1010 | 0.10 % bw |

YT 314 is a Rosin ester tackifier available from Euro-Yser Company and characterized by a softening point of 94 °C.

The formulation showed the following properties:
Viscosity at 120 °C = 18,000 mPascals per second
Elongation at break = 234 %
Energy for breaking = 150 mJoules
Creep Time = > 4,000 seconds
Eta (90) - Eta (130) / (130 - 90) = 470
T-peel film to film = 7.6 g/inch
T-peel film to nonwoven = 3.0 g/inch

The aforementioned properties show a viscosity too high for processing and very poor adhesion; particularly on nonwoven materials due to the very low penetration as outlined from the very steep slope of the curve, Viscosity vs. temperature. As shown in FIG. 1, the viscosity vs. temperature curve for Example 1 and the Comparative Examples shows the good results obtained using the embodiment of the adhesive composition described in Example 1 and the unacceptable results obtained from the composition in Example 3.

The examples demonstrate that the composition of the present invention, when compared to conventional formulations, provides superior results, making the ethylene vinyl acetate copolymer-based compositions usable as hot melt adhesives for plastics and nonwoven materials, and particularly for hygienic articles constructed with the novel ethylene vinyl acetate copolymer-based compositions, whereas the prior art formulations can not be used as adhesives for such materials.

To the extent that any meaning or definition of a term in this written document conflicts with any meaning or definition of the term in a document, the meaning or definition assigned to the term in this written document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A composition comprising:
a) a first ethylene vinyl acetate copolymer having a high molecular weight **characterized by** a melt viscosity at 150 °C, of 100 Pascals per second or more;
b) a second ethylene vinyl acetate copolymer having a low molecular weight **characterized by** a melt viscosity at 150 °C of 50 Pascals per second or less, wherein the second ethylene vinyl acetate copolymer is present in an amount by weight percent less than or equal to the amount by weight percent of the first ethylene vinyl acetate copolymer;
and wherein each of the first and second ethylene vinyl acetate copolymers individually have vinyl acetate content less than or equal to 30 % by weight of the single copolymer;
and wherein the combined overall content by weight in the composition of the two ethylene vinyl acetate copolymers is between 15 % by weight and 40 % by weight;
c) at least one tackifier resin present in an amount such that the ratio between the weight percent of the tackifier resin and the sum of the weight percent of the first and second ethylene vinyl acetate copolymers is from 0.8 to 2.5; and wherein tackifier resin is chosen from among the following chemical classes of tackifiers: aromatic hydrocarbon tackifiers, aliphatic hydrocarbon tackifiers, aliphatic-aromatic hydrocarbon tackifiers (also known as C5-C9 tackifiers), terpenic tackifiers, rosins, rosin ester tackifiers and combinations and blends of any of the foregoing tackifiers;
d) at least one hydrocarbon wax present in an amount from 0.5 % to 10 % by weight of the composition; and,
e) at least one liquid plasticizer present in an amount up to 20 % by weight of the composition; wherein the plasticizer is selected from the group consisting of naphthenic mineral oils, aromatic mineral oils, paraffinic mineral oils, vegetable oils and derivatives of vegetable oils selected from the group consisting of trans-esterified vegetable oils, partially hydrogenated vegetable oils, totally hydrogenated vegetable oils, and trans-esters thereof, and combinations thereof;
and wherein the plasticizer is present in an amount between 3 % and 20 % by weight of the composition.

2. The composition of claim 1 wherein the viscosity at 120 °C of the composition is from 2,000 to 10,000 mPascals per second.

3. The composition of claim 1 wherein the hydrocarbon wax is selected from the group consisting of Fischer Tropsch waxes, polyethylene waxes and microcrystalline waxes.

4. The composition of claim 1 wherein the ratio in weight between of the first and second ethylene vinyl acetate copolymers is greater than or equal to 0.8.

5. The composition of claim 1 wherein the composition has a setting rate defined as the ratio between a)the difference in viscosity, measured in Pascals per second, of the composition at 90 °C and the composition at 130 °C and b) the difference in temperature between 130 °C and 90 °C, of 100 or less.

6. The composition of claim 1 wherein the hydrocarbon wax has a dropping point between 90 °C and 140 °C, and the tackifier resin has a softening point between 45 °C and 130 °C.

7. An article comprised of at least one polyolefin substrate bound by the adhesive composition of claim 1.

## Patentansprüche

1. Zusammensetzung, umfassend:
a) ein erstes Ethylenvinylacetatcopolymer mit einem hohen Molekulargewicht, **gekennzeichnet durch** eine Schmelzviskosität bei 150 °C von 100 Pascal pro Sekunde oder mehr;
b) ein zweites Ethylenvinylacetatcopolymer mit einem niedrigen Molekulargewicht, **gekennzeichnet durch** eine Schmelzviskosität bei 150 °C von 50 Pascal pro Sekunde oder weniger, wobei das zweite Ethylenvinylacetatcopolymer in einer Menge in Gewichtsprozent von weniger als oder gleich der Menge in Gewichtsprozent des ersten Ethylenvinylacetatcopolymers vorliegt;
und wobei jedes des ersten und zweiten Ethylenvinylacetatcopolymers einzeln einen Vinylacetatgehalt von weniger als oder gleich 30 Gew.-% des einzelnen Copolymers aufweist;
und wobei der kombinierte Gesamtgehalt bezogen auf das Gewicht der zwei Ethylenvinylacetatcopolymere in der Zusammensetzung zwischen 15 Gew.-% und 40 Gew.-% liegt;
c) mindestens ein klebrigmachendes Harz, das in einer solchen Menge vorhanden ist, dass das Verhältnis zwischen dem Gewichtsprozentsatz des klebrigmachenden Harzes und der Summe des Gewichtsprozentsatzes des ersten und des zweiten Ethylenvinylacetatcopolymers von 0,8 bis 2,5 beträgt; und wobei das klebrigmachende Harz aus den folgenden chemischen Klassen von Klebrigmachern ausgewählt ist: aromatischen Kohlenwasserstoff Klebrigmachern, aliphatischen Kohlenwasserstoff-Klebrigmachern, aliphatisch-aromatischen Kohlenwasserstoff-Klebrigmachern (ebenfalls bekannt als C5-C9-Klebrigmacher), terpenischen Klebrigmachern, Kolophonium, Harzester-Klebrigmachern und Kombinationen und Mischungen von beliebigen der vorstehenden Klebrigmacher;
d) mindestens ein Kohlenwasserstoffwachs, das in einer Menge von 0,5 Gew.-% bis 10 Gew.-% der Zusammensetzung vorhanden ist; und
e) mindestens einen flüssigen Weichmacher, der in einer Menge bis zu 20 Gew.-% der Zusammensetzung vorhanden ist; wobei der Weichmacher ausgewählt ist aus der Gruppe bestehend aus naphthenischen Mineralölen, aromatischen Mineralölen, paraffinischen Mineralölen, pflanzlichen Ölen und Derivaten pflanzlicher Öle, ausgewählt aus der Gruppe bestehend aus transveresterten pflanzlichen Ölen, teilweise hydrierten pflanzlichen Ölen, vollständig hydrierten pflanzlichen Ölen und Transestern davon, und Kombinationen davon;
und wobei der Weichmacher in einer Menge zwischen 3 Gew.-% und 20 Gew.-% der Zusammensetzung vorhanden ist.

2. Zusammensetzung nach Anspruch 1, wobei die Viskosität bei 120 °C der Zusammensetzung von 2.000 bis 10.000 mPascal pro Sekunde beträgt.

3. Zusammensetzung nach Anspruch 1, wobei der Kohlenwasserstoffwachs ausgewählt ist aus der Gruppe bestehend aus Fischer-Tropsch-Wachsen, Polyethylenwachsen und mikrokristallinen Wachsen.

4. Zusammensetzung nach Anspruch 1, wobei das Gewichtsverhältnis zwischen dem ersten und dem zweiten Ethylenvinylacetatcopolymer mehr als oder gleich 0,8 beträgt.

5. Zusammensetzung nach Anspruch 1, wobei die Zusammensetzung eine Abbindegeschwindigkeit, definiert als das Verhältnis zwischen a) der Differenz in der Viskosität, gemessen in Pascal pro Sekunde, der Zusammensetzung bei 90 °C und der Zusammensetzung bei 130 °C und b) der Temperaturdifferenz zwischen 130 °C und 90 °C, von 100 oder weniger aufweist.

6. Zusammensetzung nach Anspruch 1, wobei der Kohlenwasserstoffwachs einen Tropfpunkt zwischen 90 °C und 140 °C aufweist und das klebrigmachende Harz einen Erweichungspunkt zwischen 45 °C und 130 °C aufweist.

7. Artikel, bestehend aus mindestens einem Polyolefinsubstrat, das durch die Klebstoffzusammensetzung nach Anspruch 1 gebunden wird.

## Revendications

1. Composition comprenant :
a) un premier copolymère d'éthylène et d'acétate de vinyle de masse moléculaire élevée **caractérisé par** une viscosité à l'état fondu, à 150 °C, de 100 Pascals par seconde ou plus ;
b) un second copolymère d'éthylène et d'acétate de vinyle de masse moléculaire faible **caractérisé par** une viscosité à l'état fondu, à 150 °C, de 50 Pascals par seconde ou moins, le second copolymère d'éthylène et d'acétate de vinyle étant présent en une quantité en pourcentage massique inférieure ou égale à la quantité en pourcentage massique du premier copolymère d'éthylène et d'acétate de vinyle ;
et chacun des premier et second copolymères d'éthylène et d'acétate de vinyle ayant séparément une teneur en acétate de vinyle inférieure ou égale à 30 % en poids du copolymère seul ;
et la teneur totale combinée en poids dans la composition des deux copolymères d'éthylène et d'acétate de vinyle se situant entre 15 % en poids et 40 % en poids ;
c) au moins une résine donnant du collant présente en une quantité telle que le rapport entre le pourcentage massique de la résine donnant du collant et la somme du pourcentage massique du premier et du second copolymère d'éthylène et d'acétate de vinyle vaut de 0,8 à 2,5 ; et où la résine donnant du collant est choisie parmi les classes chimiques suivantes d'agents poisseux : agents poisseux à base d'hydrocarbures aromatiques, agents poisseux à base d'hydrocarbures aliphatiques, agents poisseux à base d'hydrocarbures aliphatique-aromatiques (également appelés agents poisseux en C5 à C9), agents poisseux terpéniques, rosines, agents poisseux à base d'esters de rosine et combinaisons et mélanges d'agents poisseux précités quelconques ;
d) au moins une cire hydrocarbonée présente en une quantité de 0,5 % à 10 % en poids de la composition ; et,
e) au moins un plastifiant liquide présent en une quantité maximum de 20 % en poids de la composition ; le plastifiant étant choisi dans le groupe constitué par des huiles minérales naphténiques, des huiles minérales aromatiques, des huiles minérales paraffiniques, des huiles végetales et des dérivés d'huiles végétales choisies dans le groupe constitué par des huiles végétales transestérifiées, des huiles végétales partiellement hydrogénées, des huiles végétales entièrement hydrogénées, leurs transesters et leurs combinaisons ;
et ledit plastifiant étant présent en une quantité entre 3 % et 20 % en poids de la composition.

2. Composition selon la revendication 1, la viscosité à 120 °C de la composition étant de 2000 à 10 000 mPascals par seconde.

3. Composition selon la revendication 1 dans laquelle la cire hydrocarbonée est choisie dans le groupe constitué par des cires de Fischer Tropsch, des cires de polyéthylène et des cires microcristallines.

4. Composition selon la revendication 1, le rapport massique entre le premier et le second copolymère d'éthylène et d'acétate de vinyle étant supérieur ou égal à 0,8.

5. Composition selon la revendication 1 où la composition ayant une vitesse de prise au plus égale à 100, ladite vitesse étant définie comme le rapport entre a) la différence de viscosité, mesurée en Pascals par seconde, de la composition à 90 °C et la composition à 130 °C et b) la différence de température entre 130 °C et 90 °C.

6. Composition selon la revendication 1 où la cire hydrocarbonée a un point de goutte entre 90 °C et 140 °C, et la résine donnant du collant a un point de ramollissement entre 45 °C et 130 °C.

7. Article constitué d'au moins un substrat polyoléfinique lié par la composition adhésive de la revendication 1.
